# EUROPEAN PATENT APPLICATION

(11) **EP 2 447 225 A1**
(43) Date of publication of application: **02.05.2012**
(21) Application number: 10792149.6
(22) Date of filing: 23.06.2010
(51) Int. Cl.: C03B 18/16, C04B 35/584

(54) **HANGER ASSEMBLY AND DEVICE FOR PRODUCING FLOAT PLATE GLASS**

(30) Priority: 24.06.2009 JP 2009150313
(71) Applicant: Asahi Glass Company, Limited, Tokyo 100-8405 (JP)
(72) Inventor: HAMASHIMA, Kazuo, Tokyo 100-8405 (JP); TOMITA, Naruaki, Tokyo 100-8405 (JP); BAN, Nobuyuki, Tokyo 100-8405 (JP)
(74) Representative: Müller-Boré & Partner Patentanwälte
(86) International application number: PCT/JP2010/060688
(87) International publication number: WO 2010/150831

(57) **Abstract**

The object of the present invention is to provide a hanger assembly that can be used stably for a long period of time.

A hanger assembly for hanging up a fire brick that forms a ceiling surface in a float bath roof for an apparatus for producing a float plate glass, wherein at least part of the hanger assembly is made of silicon nitride, and the silicon nitride material made of silicon nitride does not contain alumina (Al₂O₃) and silica (SiO₂) substantially and contains yttria (Y₂O₃).

## Description

### TECHNICAL FIELD

The present invention relates to a hanger assembly, particularly to a hanger assembly for hanging up a fire brick that forms a ceiling surface in a float bath roof of a float bath apparatus for producing a plate glass by a float process.

### BACKGROUND ART

As one process for producing a glass product, a float process is known. In a such a float process,
(1) molten glass is introduced into a bath accommodating molten tin, so-called a float bath,
(2) on the molten tin, the molten glass is continuously transported from upstream to downstream, and
(3) with cooling, this molten glass is discharged from the float bath, to produce a glass product.

Usually, at an upper portion of the float bath, a ceiling portion so-called a float bath roof is provided. Such a float bath roof is made of a fire refractory having its lower surface (i.e. the side facing the float bath) engaged with a plurality of hangers, i.e. the float bath roof has a hanging structure. Here, the hangers are supported by a steel member provided at upper portions of the hangers to hang up the hangers.

As a material for the components constituting such hangers, it is proposed to use silicon carbide or silicon nitride (Patent Document 1).

### PRIOR ART DOCUMENT

### PATENT DOCUMENT

Patent Document 1: JP-A-6-239631

### DISCLOSURE OF INVENTION

### TECHNICAL PROBLEM

In recent years, the need for a plate glass product so-called alkali-free glass to be used for e.g. display devices such as liquid crystal panels has been expanding. However, such a glass product has a high melting point in many cases, and the surface temperature of the float bath to be used for producing such a glass product tends to increase. Further, along with such a trend, the temperature at which the hanger assembly is exposed, also tends to increase.

To cope with such a situation, a case has been recently increasing wherein a hanger is constituted by an assembly of a plurality of members. For example, a hanger is constituted by a supporting member and a supported member on the downside of the supporting member, which are connected by a connecting pin. Here, the supported member will be exposed to a higher temperature than other members of the hanger, and a case is increasing wherein silicon nitride is used as the material for such a supported member.

However, in a usual case, silicon nitride constituting the supported member of the hanger assembly contains oxides to be used as a sintering accelerator at the time of sintering, e.g. oxides such as alumina (Al₂O₃) and silica (SiO₂) Further, such oxides tend to be softened within such a temperature range as from 1,100°C to 1,200°C. Accordingly, the supported member constituted by silicon nitride (particularly the forward end portion close to the glass surface) is likely to undergo creep deformation in its use and has a danger of finally undergoing breakage. Further, due to a further increase of the surface temperature of the float bath, such a problem of creep deformation is likely to be more distinct in the future.

The present invention has been made in view of such a problem, and it is an object of the present invention to provide a hanger assembly which can be used stably over a long period of time. Further, another object is to provide an apparatus for producing a float plate glass, which has such a hanger assembly.

### SOLUTION TO PROBLEM

The present invention provides a hanger assembly for hanging up a fire brick that forms a ceiling surface in a float bath roof for an apparatus for producing a float plate glass, wherein at least part of the hanger assembly is made of silicon nitride, and the silicon nitride material made of silicon nitride does not contain alumina (Al₂O₃) and silica (SiO₂) substantially and contains yttria (Y₂O₃).

Further, the present invention provides an apparatus for producing a float plate glass, which comprises a float bath to accommodate molten tin therein, and a float bath roof having a ceiling surface formed by a fire brick hung up by a hanger assembly, wherein the hanger assembly is constituted by the hanger assembly as defined above.

### ADVANTAGEOUS EFFECTS OF INVENTION

According to the present invention, it is possible to provide a hanger assembly which can be used stably over a long period of time and which is suitable for hanging up a fire brick of a float bath roof of a float bath apparatus in an apparatus for producing a float plate glass. Further, by using such a hanger assembly, it is possible to provide an apparatus for producing a float plate glass, which can be operated to produce a float plate glass stably over a long period of time.

### BRIEF DESCRIPTION OF DRAWINGS

Fig. 1 is a cross-sectional view schematically illustrating an embodiment of a float bath apparatus for the apparatus for producing a float plate glass to be used for the production of a glass product by a float process.
Fig. 2 is a cross-sectional view illustrating an embodiment of the hanger assembly of the present invention.
Fig. 3 is a schematic view showing a state that in the hanger assembly, a portion of a pin in contact with a supporting member bites into the lower side portion of a through-hole.
Fig. 4 is a cross-sectional view schematically illustrating the construction of a test apparatus for evaluation of a sample.

### DESCRIPTION OF EMBODIMENTS

Now, the present invention will be described in detail with reference to the drawings.

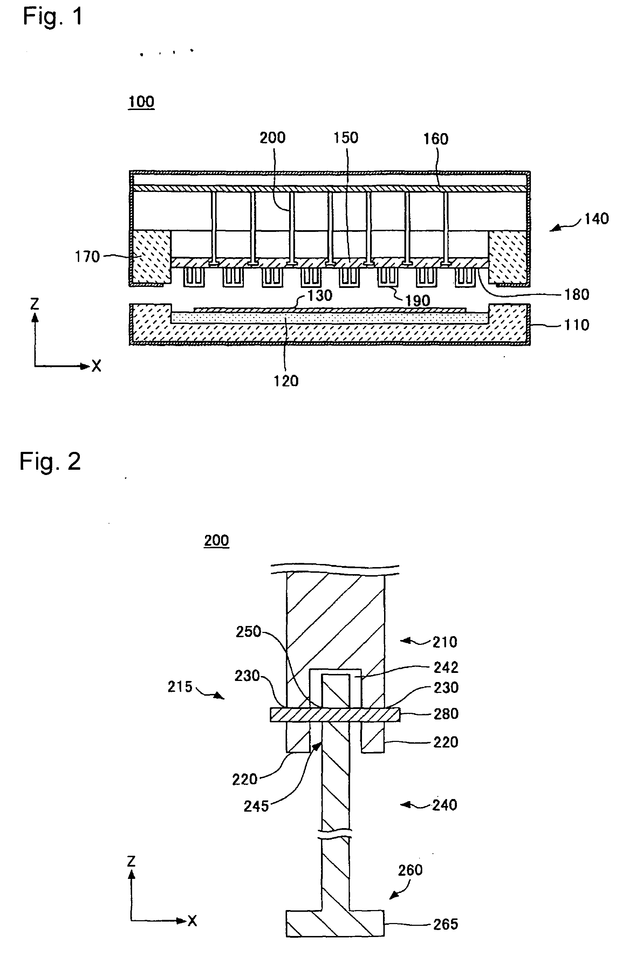

As shown in Fig. 1, a float bath apparatus 100 for an apparatus for producing a float plate glass comprises a float bath 110 and a float bath roof 140 provided above the float bath 110. Hereinafter, a float bath apparatus portion which becomes a region for forming a plate glass in a series of apparatus for producing a float plate glass will be referred to as an apparatus for producing a float plate glass or a float bath apparatus.

Inside of the float bath 110, molten tin 120 is accommodated. On the molten tin 120, molten glass 130 is supplied, and this molten glass 130 moves in a glass ribbon form from upstream towards downstream while its thickness is being adjusted. In the embodiment in Fig. 1, the molten glass 130 moves in a direction perpendicular to the plane of paper (this direction will be hereinafter referred to also as the Y direction). Therefore, Fig. 1 corresponds to a cross-sectional view when the apparatus 100 for producing a float plate glass is viewed from the direction in parallel to the travelling direction (Y direction) of the molten glass 130.

The float bath roof 140 comprises a plurality of hanger assemblies 200 extending in a substantially vertical direction (Z direction in Fig. 1), a fire brick 150 hung at the lower ends of the hanger assemblies 200, and a steel member 160 which supports the upper ends of the hanger assemblies 200. Further, side portions of the float bath roof 140 are constituted by side walls 170 made of a fire brick.

The fire brick 150 hung by the hanger assemblies 200 is two-dimensionally disposed to be uniform in a horizontal direction (X direction and Y direction) to form a ceiling surface 180 of the float bath roof 140. This ceiling surface 180 is provided with a plurality of heaters 190 along the direction (X direction in Fig. 1) substantially perpendicular to the travelling direction of the molten glass 130. In a real apparatus 100 for producing a float plate glass, the construction as shown in Fig. 1 is repeated at a plurality of Y-coordinate positions along the travelling direction (Y direction) of the molten glass 130.

Now, the construction of the hanger assembly 200 will be described in detail with reference to Fig. 2.

Fig. 2 is a schematic cross-sectional view of a hanger assembly 200 to be used for hanging up a fire brick of the float bath roof of the apparatus 100 for producing a float plate glass.

As shown in Fig. 2, the hanger assembly 200 of the present invention comprises a supporting member 210, a supported member 240 and a pin 280.

In the embodiment in Fig. 2, the supporting member 210 is substantially columnar, and its one end is connected to the above-described steel member 160 (not shown in Fig. 2). Another end 215 of the supporting member 210 has two convex portions 220 and is formed to have a reversed U-shape. Between the two convex portions 220, a space 242 is provided with a size whereby the supported member 240 can be inserted. Further, the two convex portions 220 are respectively provided with through-holes 230, so that a single pin 280 can pass therethrough in a horizontal direction (X direction in Fig. 2).

In the embodiment in Fig. 2, the supported member 240 is substantially columnar and extends coaxially with the supporting member 210 (Z direction in Fig. 2). The supported member 240 is in such a form that it is inserted between the convex portions (i.e. in the space 242) of the supporting member 210. For example, in the embodiment in Fig. 2, the first end 245 of the supported member 240 has a diameter equal to the diameter of the extending portion of the support member 240, and this diameter is narrower than the distance between the convex portions 220 of the supporting member 210.

Further, the first end 245 of the supported member 240 has a through-hole in which the pin 280 passes through. This through-hole 250 is formed so that when the first end 245 of the supported member 240 is inserted in the space 242 between the convex portions 220 of the supporting member 210, and the pin 280 is inserted through the through-hole 230 formed in one convex portion 220, the pin 280 will just pass through the through-hole 250 and pass through the through-hole 230 formed in another convex portion 220 of the end 215 of the supporting member 210. Thus, by letting the pin 280 pass through the respective through-holes 230 and 250 of the supporting member 210 and the supported member 240, the supporting member 210 and the supported member 240 are integrated to constitute a hanger assembly 200.

The second end 260 of the supported member 240 is, for example, in such a form that a rectangular parallelepiped hook member 265 is provided, and on this hook member 265, the above-mentioned fire brick 150 is to be hooked.

In such an apparatus 100 for forming a float plate glass, the maximum temperature of the molten glass 130 formed into a glass ribbon shape is within a range of from about 1,000°C to 1,100°C, although it varies depending upon the finally obtainable product. However, recently, the need for a glass product so-called alkali-free glass to be used for e.g. display devices such as liquid crystal panels has expanded. Such a glass product has a high melting point in many cases, and in recent years, the maximum temperature of the molten glass 130 tends to gradually increase, (e.g. 1,200°C). Along with such a trend, the temperature at which the hanger assembly 200 is exposed, also tends to increase. For example, it is likely that the second end 260 of the supported member 240 which is exposed to the highest temperature among the hanger assembly 200, is exposed to a temperature of e.g. from 1,100°C to 1,200°C

Further, in a usual case, the interior of the apparatus 100 for producing a float plate glass is made to be a reducing atmosphere in order to prevent oxidation of the molten tin 120. Therefore, the space above the float bath in the apparatus 100 for producing a float plate glass is made to be a mixed gas atmosphere of hydrogen and nitrogen. Accordingly, the hanger assembly 200 is exposed to a reducing atmosphere having a very high temperature in a state of hanging up and supporting the fire brick 150 (i.e. in a state having a tensile stress loaded).

In order to cope with the use in such an environment, a heat resistant nickel-based alloy has heretofore been used as the material for the supporting member 210 of the hanger assembly 200. Further, a case has been increasing wherein silicon nitride (Si₃N₄) is used as the material for the supported member 240 and the pin 280 in the hanger assembly 200, which are exposed to a higher temperature.

However, in a usual case, a silicon nitride material contains oxides to be used as a sintering accelerator at the time of sintering, e.g. oxides such as alumina (Al₂O₃) and silica (SiO₂). Such oxides tend to be softened in such a temperature range as from 1,100°C to 1,200°C.

Accordingly, the supported member 240 and the pin 280 made of a silicon nitride material tend to undergo creep deformation in the use and have a danger of finally undergoing breakage. Especially, the second end 260 of the supported member 240 is closest to the surface of the molten glass 130 and has a high temperature and thus it is highly likely to undergo creep deformation. Further, due to a further temperature rise of the molten glass 130, such a problem of creep deformation is likely to be more distinct in the future.

Further, the pin 280 in the hanger assembly 200 is made of a silicon nitride material similar to the supported member 240. Accordingly, the same problem is likely to occur also with respect to the pin 280.

Here, the pin 280 is relatively distanced from the surface of the molten glass 130 and expected to be not exposed to such a high temperature as the supported member 240. However, the pin 280 is required to support the entire supported member 240 in a relatively narrow region located substantially at the center of the pin. Therefore, in the case of the pin 280, the possibility of undergoing creep deformation and further breakage is likely even at a temperature lower than the supported member 240.

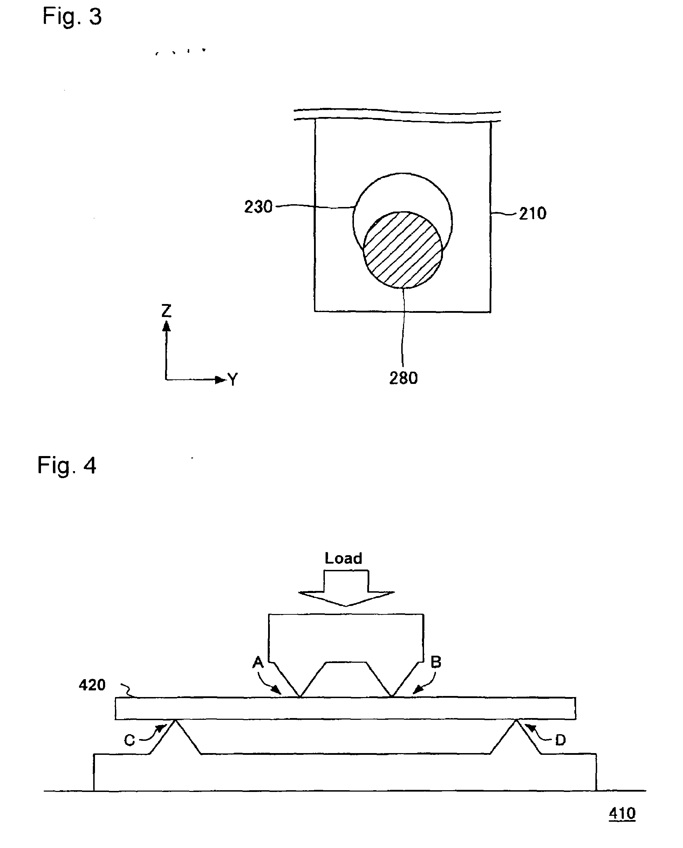

Further, even if breakage can be avoided, if the strength of the pin 280 is lowered by a high temperature, a portion of the pin 280 in contact with the supporting member 210 is likely to bite into the lower portion of a through hole 230 of the supporting member 210, and the pin 280 is likely to be fixed to the through hole 230 of the supporting member 210, as schematically shown in Fig. 3. Usually, a hanger assembly is periodically inspected, and relatively severely damaged supported member 240 (and pin 280) are changed at shorter intervals than the supporting member 210. However, if the pin 280 is fixed to the supporting member 210 in such a state as shown in Fig. 3, there will be a problem such that it becomes impossible to change the supported member 240.

In order to solve such a problem, in the present invention, the supported member 240 and the pin 280 of the hanger assembly 200 are made of a material of a sintered product of silicon nitride which does not contain alumina (Al₂O₃) and silica (SiO₂) substantially and which contains yttria (Y₂O₃). Especially, in the present invention, yttria is preferably contained in an amount of from 3 to10 mass% based on silicon nitride. Further, by not containing alumina (Al₂O₃) and silica (SiO₂), it is possible to increase the effect to prevent creep deformation. Further, it is preferred that the above-mentioned hook member 265 is also made of the same silicon nitride material as the above supported member and pin. In such a case, it is possible to produce the hook member integrally with the supported member.

Such a silicon nitride material has a characteristic that it is less susceptible to softening even at a high temperature as compared with the above-mentioned silicon nitride material which contains an oxide or mixed oxide, such as alumina (Al₂O₃) and/or silica (SiO₂). Thus, by the supported member 240 and the pin 280 made of such a silicon nitride material, the creep resistance or deformation resistance at a high temperature is significantly improved.

Accordingly, the hanger assembly 200 of the present invention can be used stably over a long period of time even in a process for producing a high melting point glass product such as alkali-free glass. Further, fixing of the pin 280 to the supporting member 210 is also significantly prevented. Therefore, at the time of the periodical maintenance of the hanger assembly 200, the supported member 240 and/or the pin 280 can properly be changed.

Further, the silicon nitride material constituting the supported member 240 and the pin 280 may further contain an oxide of at least one metal selected from the group consisting of lanthanoid (L), actinoid (A), titanium (Ti), zirconium (Zr), hafnium (Hf) and silicon (Si), in addition to yttria (Y₂O₃). Such oxides are preferably in an amount of from 2 mass% to 18 mass%, as the total amount of contents of such oxides, based on silicon nitride.

The lanthanoid (L) includes elements of number 57 to number 71 in the periodic table, e.g. lanthanum (La), cerium (Ce) and erbium (Er). Whereas, the actinoid (A) includes elements of number 89 to number 103 in the periodic table e.g. thorium (Th).

Especially when the supported member 240 and the pin 280 are made of a silicon nitride material containing at least one member selected from the group consisting of yttria (Y₂O₃)', zirconium oxide (ZrO₂) and erbium oxide (Er₂O₃), it is possible to obtain an extremely good creep resistance property. When such oxides are contained, the content is preferably from 2 mass% to 12 mass%, in a total amount of contents of such oxides, based on silicon nitride.

Further, the silicon nitride material constituting the supported member 240 and the pin 280 preferably has a ratio of the flexural strength at room temperature to the Young's modulus at room temperature being at least 0.003. Further, the silicon nitride material of the present invention preferably has a ratio of the flexural strength at 1,200°C to the Young's modulus at room temperature being at least 0.002. In such a case, it is possible to significantly suppress the above-mentioned fixing of the pin 280 to the supporting member.

### EXAMPLES

Now, Examples of the present invention will be described.

### EXAMPLE 1

Using a sample of a silicon nitride material, an evaluation test for creep resistance at a high temperature was carried out. The evaluation test was a four-point bending test at a high temperature, which was carried out by the following method.

Firstly, a strip sample of a silicon nitride material of 10 mm in width × 100 mm in length × 2 mm in thickness was prepared. This sample was a silicon nitride sintered product containing Si₃N₄ as the main component and Y₂O₃ as a sintering accelerator (content of yttria: 6 mass%). Further, this sample had a ratio of the flexural strength at room temperature to the Young's modulus at room temperature being 0.0033 and a ratio of the flexural strength at 1,200°C to the Young's modulus at room temperature being 0.0025.

Then, as shown in Fig. 4, in an electric furnace 410 for the bending test, the sample 420 was set so that the upper surface of 100 mm × 10 mm became horizontal. In this electric furnace 410, the sample 420 is set so that two supports A and B are disposed in the vicinity of the center of the long side of the sample to extend over the width direction of the short side, and separate two supports C and D are disposed in the vicinity of both ends of the sample 420. The supports A and B are disposed on the upper surface side of the sample 420, and the supports C and D are disposed on the lower surface side of the sample 420. The distance between the supports A and B is 10 mm. Further, the distance between the supports C and D is 80 mm. Further, the distance from point C to its end is 10 mm, and also the distance from point D to its end is 10 mm.

Then, in the atmospheric air, the sample 420 was heated to 1,200°C, and then, a load was exerted from above so that the maximum bending stress became 18 MPa between the supports A and B. This state was maintained for 500 hours. Then, the load was removed, and the sample 420 was cooled (in the furnace) to room temperature.

Then, the sample 420 was taken out from the electric furnace 410, and the deflection of the sample after the test was measured.

As a result of the measurement, the deflection was less than 0.1 mm at the maximum.

### COMPARATIVE EXAMPLE 1

By using a sample of a silicon nitride material having another composition, the same evaluation was carried out. The sample used was one containing Al₂O₃ and SiO₂ as sintering accelerators and MgO. Further, this sample had a ratio of the flexural strength at room temperature to the Young's modulus at room temperature being 0.0027 and a ratio of the flexural strength at 1,200°C to the Young's modulus at room temperature being 0.0017. The contents of Al₂O₃, SiO₂ and MgO in this sample were 8 mass%, 3 mass% and 2 mass%, respectively, based on silicon nitride.

As a result of the measurement, the deflection was 9 mm. From these results, it is evident that with the sample in Example 1, the deformation strength is significantly improved as compared with the conventional silicon nitride.

### (Evaluation after use for long period of time)

Using a float bath apparatus as shown in Fig. 1, the production of a plate glass was carried out. As the hanger assembly, one having a construction as shown in Fig. 2 was used. In the hanger assembly, the supporting member was made of a nickel-based alloy, and the supported member and the pin were made of the silicon nitride material having the composition used in the above-described Example 1.

An example of the composition of a plate glass to be produced by the apparatus for producing float glass of the present invention is shown below.

Alkali-free glass comprising, by mass percentage based on oxides, from 50 to 66% of SiO₂, from 10.5 to 22% of Al₂O₃, from 0 to 12% of B₂O₃, from 0 to 8% of MgO, from 0 to 14.5% of CaO, from 0 to 24% of SrO, from 0 to 13.5% of BaO, and from 9 to 29.5% of MgO+CaO+SrO+BaO.

Further, in the operation of the float bath apparatus used, the temperature of the second end side of the supported member of the hanger assembly was within a range of from about 1,100°C to 1,300°C (calculated value).

Upon expiration of about 5 years from the operation of the float bath apparatus, inspection of the float bath apparatus is carried out. As a result, substantially no sagging of the ceiling surface of the float bath roof is observed. Further, in any hanger assembly, no breakage is observed in the constituting members.

### INDUSTRIAL APPLICABILITY

According to the present invention, it is possible to improve the heat resistance and creep resistance of the hanger structure for hanging up the fire brick to form a ceiling surface of a float bath roof of a float bath apparatus, whereby it is possible to produce plate glass stably over a long period of time, and the present invention is useful particularly for the production of a glass plate wherein formation of plate glass at a higher temperature is required.

The entire disclosure of Japanese Patent Application No. 2009-150313 filed on June 24, 2009 including specification, claims, drawings and summary is incorporated herein by reference in its entirety.

### REFERENCE SYMBOLS

- 100:: Apparatus for producing float plate glass
- 110:: Float bath
- 120:: Molten tin
- 130:: Molten glass
- 140:: Float bath roof
- 150:: Fire brick
- 160:: Steel member
- 170:: Side wall
- 180:: Ceiling surface
- 190:: Heater
- 200:: Hanger assembly
- 210:: Supporting member
- 215:: End of supporting member
- 220:: Convex portion
- 230, 250:: Through-hole
- 240:: Supported member
- 242:: Space
- 245:: First end of supported member
- 260:: Second end of supported member
- 265:: Hooking member
- 280:: Pin
- 410:: Electric furnace
- 420:: Sample

## Claims

1. A hanger assembly for hanging up a fire brick that forms a ceiling surface in a float bath roof for an apparatus for producing a float plate glass, wherein at least part of the hanger assembly is made of silicon nitride, and the silicon nitride material made of silicon nitride does not contain alumina (Al₂O₃) and silica (SiO₂) substantially and contains yttria (Y₂O₃).

2. The hanger assembly according to Claim 1, wherein the silicon nitride material contains yttria in an amount of from 3 to 10 mass%, based on silicon nitride.

3. The hanger assembly according to Claim 1, wherein the silicon nitride material further contains an oxide of at least one metal selected from the group consisting of lanthanoid (L), actinoid (A), titanium (Ti), zirconium (Zr) and hafnium (Hf).

4. The hanger assembly according to any one of Claims 1 to 3, wherein the silicon nitride material further contains an oxide of at least one metal selected from the group consisting of lanthanoid (L), actinoid (A), titanium (Ti), zirconium (Zr) and hafnium (Hf) in an amount of from 2 to 18 mass%, as such one metal oxide or a plurality of metal oxides, based on silicon nitride.

5. The hanger assembly according to any one of Claims 1 to 4, wherein the silicon nitride material contains zirconium oxide (ZrO₂) and/or erbium oxide (Er₂O₃).

6. The hanger assembly according to any one of Claims 1 to 5, wherein the silicon nitride material contains zirconium oxide (ZrO₂) and erbium oxide (Er₂O₃) in an amount of from 2 to 12 mass%, based on silicon nitride.

7. The hanger assembly according to any one of Claims 1 to 6, wherein the silicon nitride material has a ratio of the flexural strength at room temperature to the Young's modulus at room temperature being at least 0.003 and a ratio of the flexural strength at 1,200°C to the Young's modulus at room temperature being at least 0.002.

8. The hanger assembly according to any one of Claims 1 to 7, which comprises a supporting member and a supported member latched by a pin, wherein the supported member is closer to the fire brick than the supporting member; the supported member is made of the silicon nitride material; the supporting member is made of a heat-resistant nickel-based alloy; and the pin is made of the silicon nitride material.

9. An apparatus for producing a float plate glass, which comprises a float bath to accommodate molten tin therein, and a float bath roof having a ceiling surface formed by a fire brick hung up by a hanger assembly, wherein the hanger assembly is constituted by the hanger assembly as defined in any one of Claims 1 to 8.
